# FASCICULE DE BREVET EUROPEEN

(11) **EP 2 686 934 B1**
(45) Date de publication et mention de la délivrance du brevet: **16.11.2016**
(21) Numéro de dépôt: 12707774.1
(22) Date de dépôt: 09.03.2012
(51) Int. Cl.: H02J 1/10, H02J 3/28, H02J 3/32, H02J 3/38, H02J 15/00

(54) **SYSTÈME D'ALIMENTATION ÉLECTRIQUE HYBRIDE AUTONOME D'UN ÉQUIPEMENT ÉLECTRIQUE ET UNITÉ ET PROCÉDÉ DE GESTION DU SYSTÈME**
AUTONOMES HYBRIDNETZTEIL FÜR EINE ELEKTRISCHE VORRICHTUNG SOWIE EINHEIT UND VERFAHREN ZUR VERWALTUNG DES SYSTEMS
SELF-CONTAINED HYBRID POWER SUPPLY SYSTEM FOR AN ELECTRICAL APPARATUS, AND UNIT AND METHOD FOR MANAGING THE SYSTEM

(30) Priorité: 17.03.2011 FR 1152219
(43) Date de publication de la demande: 22.01.2014
(73) Titulaire: Powidian, 37170 Chambray Les Tours (FR)
(72) Inventeur: MUNIER, Eric, F-78180 Montigny Le Bretonneux (FR); BOURGEAIS, Jean-Marie, F-78720 Saint Forget (FR); DE GENTILE, Marion, F-92140 Clamart (FR)
(74) Mandataire: Gevers & Orès
(86) Numéro de dépôt international: PCT/EP2012/054091
(87) Numéro de publication internationale: WO 2012/123350

(56) Documents cités:
- US-A1- 2003 227 276
- US-A1- 2005 184 594
- US-A1- 2009 048 716
- US-B1- 7 233 079

## Description

La présente invention concerne un système d'alimentation électrique hybride autonome d'un équipement électrique, en particulier une station de télécommunications comme une station de base d'un réseau pour mobiles. Le système d'alimentation électrique peut être transportable.

Actuellement, des opérateurs de télécommunications sont sollicités pour déployer des réseaux de télécommunications pour mobiles dans des pays et régions dépourvus de réseau de distribution d'énergie électrique. Une station dans un tel réseau de télécommunications devrait être autonome pour sa consommation en énergie électrique et ne nécessiter aucun gardiennage. Outre son autonomie, la station devrait satisfaire des contraintes de mobilité, d'accessibilité et de protection si elle est utilisée pour des secours lors de catastrophes naturelles ou lors de conflits et/ou dans des zones isolées, et offrir un coût de fabrication peu élevé pour la rendre accessible à des régions pauvres.

Les systèmes d'alimentation électrique hybrides autonomes connus ne satisfont que partiellement à ces contraintes. Ils comprennent en général une source d'énergie renouvelable produisant de l'électricité, un module de stockage d'électricité garantissant une relative autonomie et une unité électronique de commande assurant une alimentation électrique relativement permanente de la station de télécommunications.

La source d'énergie renouvelable est le plus souvent hybride et comporte plusieurs cellules d'énergie renouvelable, comme une génératrice éolienne et des panneaux solaires photovoltaïques. Une telle solution présente des inconvénients. Par exemple, un mât d'éolienne trop grand dont le sommet supporte la station de télécommunications n'est pas transportable et la station est difficilement accessible. Selon un autre exemple, de nombreuses éoliennes et/ou des panneaux solaires trop grands ou nombreux ne conviennent pas à un système d'alimentation transportable.

Le module de stockage d'électricité peut comprendre une batterie électrique au plomb-acide qui présente les inconvénients d'avoir une taille et un poids excessifs ce qui rend difficile sa protection dans un caisson transportable, comme un "shelter". En outre, la durée de vie de la batterie diminue d'autant plus que la température augmente sur le site où le système d'alimentation est installé, la batterie ayant tendance à gonfler sous la chaleur.

Le module de stockage d'électricité est bien souvent associé à un groupe de production d'électricité qui peut être un groupe électrogène diesel ou une pile à combustible. Le groupe de production d'électricité pallie une décharge de la batterie à cause d'une insuffisance d'énergie renouvelable par exemple pendant des périodes sans vent et/ou non ensoleillées, notamment nocturnes, de quelques jours. Le groupe électrogène est bruyant, dégage de la fumée nuisible à l'environnement, et est coûteux en carburant. Il nécessite une maintenance fréquente et suppose l'installation d'une cuve contenant du carburant qui peut être dérobé.

Pour remédier aux inconvénients du groupe électrogène, celui-ci peut être remplacé par une pile à combustible participant à la continuité de l'alimentation en énergie électrique. Le combustible de la pile peut être du méthanol ou de l'hydrogène. Dans une pile à combustible au méthanol, le méthanol est reformé pour produire de l'hydrogène alimentant la pile qui rejette du gaz carbonique. Le méthanol ne peut pas être produit sur site et doit être stocké et réapprovisionné. De même, l'hydrogène d'une pile à hydrogène doit être stocké sous haute pression dans des bouteilles qui doivent être réapprovisionnées.

L'hydrogène peut être produit régulièrement par électrolyse de l'eau pour éviter un approvisionnement en combustible. Dans ce cas, l'hydrogène produit par un électrolyseur doit être compressé sous pression très élevée et stocké dans des bouteilles sur site ce qui requiert des moyens lourds, complexes et coûteux incompatibles avec un système d'alimentation transportable. En outre, la réglementation sur le stockage d'hydrogène sous haute pression est contraignante et le stockage d'hydrogène doit être sécurisé par exemple par un gardiennage. Une source d'alimentation en eau doit être prévue sur le site pour le fonctionnement de l'électrolyseur.

Pour remédier aux inconvénients du stockage de l'hydrogène dans des bouteilles, des réservoirs de stockage d'hydrogène fondés sur une réaction d'hydruration réversible ont été conçus récemment. Cependant une unité génératrice électrochimique comportant une pile à hydrogène, un électrolyseur et un réservoir de stockage d'hydrogène de ce type n'est pas autonome en eau pour l'électrolyseur.

Dans tous les systèmes d'alimentation électrique, les unités génératrices comprenant des piles à combustible ont un coût élevé, une durée de vie de quelques milliers d'heures et un faible rendement.

Le document US 2003/0227276 décrit une batterie d'alimentation d'un équipement électrique qui reçoit de l'énergie d'une source intermittente (éolien, panneaux solaire...) et qui est en outre couplée a une pile de combustible. Celle-ci stocke de l'énergie sous forme d'hydrogène lorsque le niveau de la batterie est au-dessus d'un certain seuil prédéterminé et transforme de l'hydrogène en énergie lorsque le niveau de la batterie est en-dessous d'un certain seuil prédéterminé.

L'invention vise à gérer automatiquement un système d'alimentation d'un équipement électrique, qui peut être alimenté indifféremment par une source de puissance électrique intermittente, un module de stockage d'énergie électrique et une unité génératrice électrochimique à combustible gazeux, afin de recourir le moins possible à l'unité génératrice électrochimique pour alimenter l'équipement et ainsi afin d'accroître la longévité de l'unité génératrice électrochimique à combustible et l'autonomie du système d'alimentation et de réduire la maintenance de celui-ci.

A cette fin, un procédé pour gérer la continuité de l'alimentation électrique d'un équipement électrique fournie en priorité par une source de puissance électrique intermittente, le procédé recourant à un module de stockage d'énergie électrique et une unité génératrice électrochimique à combustible gazeux, selon les caractéristiques techniques de la revendication 1.

Selon l'invention, l'unité génératrice électrochimique ne produit et stocke du combustible que si une double condition très particulière est satisfaite et correspond à une puissance de la source intermittente excédant la puissance de fonctionnement de l'équipement et une puissance du module de stockage d'énergie électrique au moins égale au premier seuil de puissance, tel qu'un seuil de pleine charge. L'unité génératrice électrochimique n'est activée que dès qu'une condition très particulière est satisfaite et correspond à une puissance du module de stockage d'énergie électrique comprenant au moins une batterie ayant atteint le second seuil de puissance, tel qu'un seuil de décharge. Ces deux conditions permettent de recourir le moins possible à l'unité génératrice électrochimique à combustible et le plus possible à la source intermittente et au module de stockage d'énergie électrique pour alimenter l'équipement. En effet, la longévité de la pile à combustible incluse dans l'unité génératrice est indépendante de la puissance qu'elle délivre, mais est dépendante du nombre d'activation-désactivation de la pile, tandis qu'une batterie incluse dans le module de stockage d'énergie électrique a une longévité élevée de plusieurs années même si elle subit un nombre très élevé de charges et décharges. Les conditions précitées diminuent également la fréquence de la maintenance du système d'alimentation, en particulier de l'unité génératrice électrochimique.

La source de puissance électrique intermittente peut être un dispositif d'énergie renouvelable ou un réseau de distribution d'énergie électrique peu fiable.

En complément des deux étapes précitées, le procédé de gestion selon l'invention comprend en outre l'étape suivante qui est exécutée tant que le module de stockage d'énergie électrique n'a pas atteint le second seuil de puissance, et sans recourir à l'énergie stockée dans l'unité génératrice électrochimique:
une alimentation de l'équipement par la source et un chargement du module de stockage d'énergie électrique par la source intermittente lorsque la puissance de la source excède la puissance de fonctionnement de l'équipement et la puissance du module de stockage d'énergie électrique est comprise entre les premier et second seuils de puissance, et
une alimentation de l'équipement par au moins le module de stockage d'énergie électrique lorsque la puissance de la source intermittente est inférieure à la puissance de fonctionnement de l'équipement et la puissance du module de stockage d'énergie électrique est comprise entre les premier et second seuils de puissance.

Dans la deuxième étape ci-dessus, l'alimentation de l'équipement par au moins le module de stockage d'énergie électrique signifie que l'équipement peut être alimenté à la fois par le module de stockage d'énergie électrique et la source intermittente, ou bien seulement par le module de stockage d'énergie électrique, si les deux conditions suivantes sont satisfaites: la puissance de la source intermittente est inférieure à la puissance de fonctionnement de l'équipement et donc peut être nulle, et la puissance du module de stockage d'énergie électrique est supérieure au second seuil, c'est-à-dire comprise entre les deux seuils de puissance.

La gestion de la continuité de l'alimentation électrique de l'équipement peut être réalisée automatiquement par une unité de gestion pour gérer l'alimentation de l'unité génératrice électrochimique en fonction de la charge du module de stockage d'énergie électrique. Dans ce cas afin de préserver l'autonomie du système d'alimentation, l'alimentation de l'unité de gestion est simultanée à l'alimentation de l'équipement, l'équipement et l'unité de gestion constituant la charge électrique du système dont la continuité de l'alimentation électrique doit être garantie.

L'unité génératrice électrochimique peut être seule ou complétée par plus d'une autre unité génératrice électrochimique en fonction de la capacité du module de stockage d'énergie électrique et de la rapidité souhaitée de la recharge de celui-ci. Selon une réalisation particulière de l'invention utilisant une pile à combustible, par exemple à hydrogène, il peut être prévu dans chaque unité génératrice électrochimique
une production de combustible par un électrolyseur et un stockage du combustible produit dans un réservoir de stockage lorsque l'électrolyseur est alimenté par la source, et
un déstockage du combustible depuis le réservoir de stockage dans une pile à combustible dès que la puissance du module de stockage d'énergie électrique est au second seuil de puissance et jusqu'à ce que la puissance du module de stockage d'énergie électrique alimenté par la pile atteigne le premier seuil de puissance.

Selon une autre caractéristique de l'invention, l'autonomie en eau à fournir à l'électrolyseur est assurée par une condensation de vapeur d'eau d'air extérieur en eau de condensation pendant le déstockage d'hydrogène. Le stockage d'hydrogène peut comprendre une adsorption d'hydrogène par un alliage pour former un hydrure, et la condensation peut résulter d'un transfert de chaleur de l'air chargé de vapeur d'eau à une réaction endothermique de l'hydrure en alliage.

L'invention concerne également un système pour alimenter un équipement électrique sous la commande d'une unité de gestion, le système comprenant une source de puissance électrique intermittente, un module de stockage d'énergie électrique et une unité génératrice électrochimique à combustible gazeux, selon les caractéristiques techniques de la revendication 8.

Afin que les fonctions de ces moyens soient commandées par un moyen de commande du type contrôleur programmable, l'unité de gestion peut comprendre des commutateurs reliés à la source et à l'unité génératrice électrochimique, des convertisseurs de courant reliés au module de stockage d'énergie électrique, à l'équipement et à l'unité génératrice électrochimique. Le moyen de commande peut être apte à commander les commutateurs et les convertisseurs pour que l'unité génératrice électrochimique soit apte à alimenter à l'équipement et le module de stockage d'énergie électrique dès que le module de stockage d'énergie électrique est apte à avoir une puissance égale au second seuil de puissance et jusqu'à le module de stockage d'énergie électrique chargé par l'unité génératrice électrochimique soit apte à atteindre le premier seuil de puissance, et pour qu'au moins le module de stockage d'énergie électrique soit apte à alimenter l'équipement lorsque la source intermittente est apte à avoir une puissance inférieure à la puissance de fonctionnement de l'équipement et le module de stockage d'énergie électrique est apte à avoir une puissance comprise entre les premier et second seuils de puissance.

Pour réaliser les conditions précitées qui peuvent dépendre de mesures de diverses puissances électriques, l'unité de gestion selon l'invention peut encore comprendre un moyen pour mesurer la puissance fournie par la source, un moyen pour mesurer la puissance fournie par l'unité génératrice électrochimique lorsque l'unité génératrice électrochimique est apte à charger le module de stockage d'énergie électrique, un moyen pour piloter la tension d'alimentation d'un électrolyseur inclus dans l'unité génératrice électrochimique, un moyen pour mesurer la puissance de fonctionnement de l'équipement, et un moyen pour mesurer la puissance du module de stockage d'énergie électrique.

Le système comprend la source de puissance électrique intermittente, le module de stockage d'énergie électrique et l'unité génératrice électrochimique à combustible gazeux, et est caractérisé en ce que la source intermittente est une source d'énergie renouvelable pouvant comprendre une ou plusieurs génératrices éoliennes et/ou un ou plusieurs panneaux solaires photovoltaïques.

Selon une autre réalisation, le système comprend le module de stockage d'énergie électrique et l'unité génératrice électrochimique à combustible gazeux, et est caractérisé en ce que la source intermittente est un réseau de distribution d'énergie électrique. Pour cette réalisation, le système fait office de système d'alimentation de secours lorsque le réseau de distribution est coupé ou lorsque la puissance délivré par celui-ci est anormalement trop faible pour alimenter l'équipement.

Dans ces deux réalisations, le système d'alimentation électrique peut être entièrement autonome en électricité, combustible et eau, silencieux, non polluant et modulable, avoir une longévité d'au moins une quinzaine d'années et nécessiter peu de maintenance.

Afin d'accroître la longévité du système, le module de stockage d'énergie électrique peut comprendre au moins une batterie au lithium-ion.

Lorsque l'unité génératrice électrochimique comprend une pile à combustible, la pile à combustible est apte à alimenter l'équipement et charger le module de stockage d'énergie électrique dès que le module de stockage d'énergie électrique est apte à avoir une puissance égale au second seuil de puissance et jusqu'à le module de stockage d'énergie électrique chargé par l'unité génératrice électrochimique soit apte à atteindre le premier seuil de puissance. Aucun approvisionnement en combustible n'est nécessaire lorsque l'unité génératrice électrochimique comprend aussi un électrolyseur pour produire du combustible lorsque la source est apte à avoir une puissance excédant la puissance de fonctionnement de l'équipement et le module de stockage d'énergie électrique est apte à avoir une puissance au moins égale au premier seuil de puissance, et un réservoir de stockage pour stocker du combustible produit par l'électrolyseur et déstocker du combustible dans la pile.

Si le combustible est de l'hydrogène, l'unité génératrice électrochimique peut comprendre un condenseur pour condenser de la vapeur d'eau d'air extérieur en eau de condensation pendant un déstockage d'hydrogène du réservoir de stockage dans la pile et un réservoir-collecteur d'eau pour collecter l'eau de condensation pendant le déstockage d'hydrogène et fournir l'eau de condensation à l'électrolyseur lorsque l'électrolyseur est apte à être alimenté par la source. En fonction des conditions climatiques du site d'installation du système, le condenseur peut être apte à condenser de la vapeur d'eau fournie par la pile.

Enfin, l'invention se rapporte à un programme d'ordinateur apte à être mis en oeuvre dans une unité de gestion et caractérisé en ce qu'il comprend des instructions qui, lorsque le programme est exécuté dans l'unité de gestion, réalisent le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système d'alimentation électrique selon l'invention ;
- la figure 2 est un bloc-diagramme schématique d'une unité génératrice électrochimique à combustible gazeux inclus dans le système ; et
- la figure 3 est un algorithme du procédé de gestion d'alimentation électrique selon l'invention.

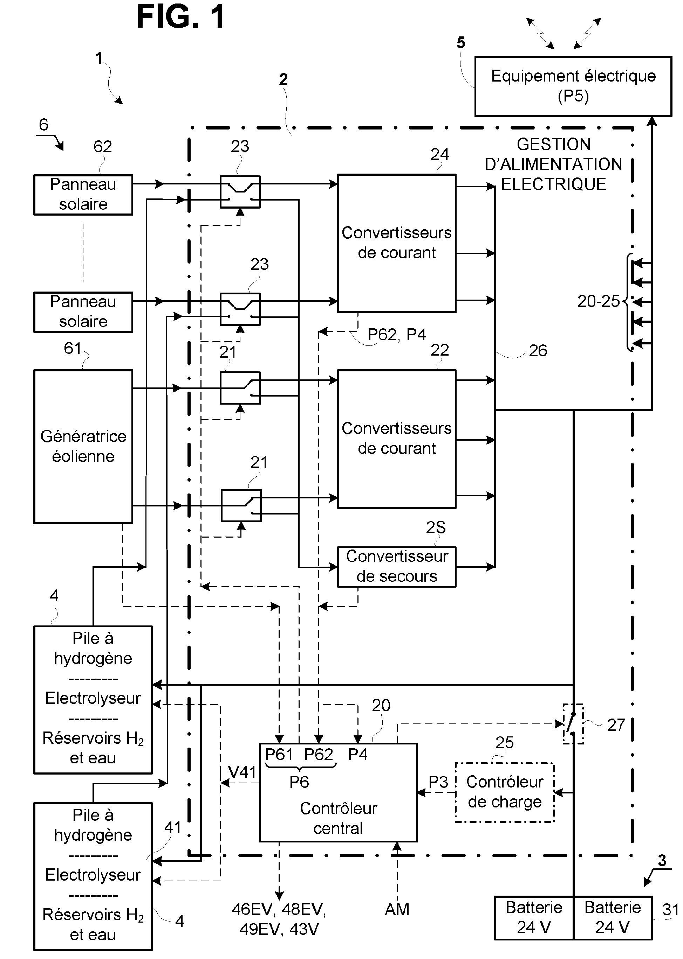

En référence à la figure 1, un système d'alimentation électrique 1 selon l'invention comprend une unité de gestion d'alimentation électrique 2, un module de stockage d'énergie électrique 3 et au moins une unité génératrice électrochimique à combustible gazeux 4, par exemple deux unités génératrices électrochimiques. Le système 1 est destiné à alimenter en puissance électrique un équipement électrique 5 et à être relié à une source de puissance électrique intermittente 6.

L'équipement électrique 5 fait office de charge électrique du système d'alimentation et est par exemple une station de télécommunications fonctionnant en émetteur et récepteur pour terminaux mobiles. L'équipement 5 est alimenté en permanence par le système d'alimentation 1 avec une puissance électrique de fonctionnement P5 variable en fonction des services assurés par l'équipement. Par exemple, l'équipement est alimenté sous une tension continue de 48 V correspondant à la tension nominale en sortie du module de stockage d'énergie électrique 3.

Selon une première utilisation illustrée à la figure 1 à laquelle on se référera ci-après, la source de puissance intermittente 6 est un dispositif d'énergie renouvelable comprenant par exemple un module éolien et un module d'énergie solaire. Le module éolien comprend par exemple au moins une génératrice éolienne 61 qui génère un courant alternatif intermittent en sortie triphasée selon la réalisation illustrée à la figure1, ou un courant continu intermittent. Le module d'énergie solaire comprend au moins un panneau solaire photovoltaïque 62. Par exemple deux ou trois panneaux solaires photovoltaïques 62 sont connectés en parallèle à l'unité 2. Les panneaux solaires génèrent un courant continu intermittent.

Globalement, la source de puissance 6 est capable de fournir une puissance récupérable P6 variable en fonction de la position géographique du site d'installation du système 1.

Le module de stockage d'énergie électrique 3 comprend des batteries électriques 31 et présente par exemple une tension nominale de 48 V. Les batteries sont par exemple au lithium-ion afin d'offrir une longévité de plusieurs années pour un nombre élevé de cycle de charge-décharge. La capacité des batteries est telle que le cycle de charge-décharge dure 24 heures environ lorsqu'elles alimentent en permanence l'équipement 5. Elles fournissent une puissance P3 mesurée en permanence et comprise entre une puissance de charge minimale P3m, dite puissance de décharge, et une puissance de charge maximale P3M dite puissance de pleine charge. Les batteries sont chargées par la source de puissance 6 pendant des périodes de vent et/ou d'ensoleillement suffisants et servent de tampon pendant des périodes sans vent et/ou d'ensoleillement sur le site où le système 1 est installé, pour fournir de la puissance électrique à l'équipement 5 tant que la puissance P3 n'a pas atteint la puissance de décharge P3m. La puissance de décharge P3m est suffisante pour alimenter l'unité de gestion 2 et l'équipement 5 et pour faire démarrer les piles dans les unités génératrices électrochimiques 4 selon le cycle du procédé de gestion du système d'alimentation 1 décrit plus loin. Pendant de longues périodes sans vent et ensoleillement supérieures à 24 heures environ et pouvant atteindre plus d'une dizaine de jours, les unités génératrices électrochimiques 4 sont activées par l'unité de gestion 2 chaque fois que la puissance P3 atteint la puissance de décharge P3m afin de recharger rapidement les batteries 31, typiquement en 3 heures environ. Les unités 4 assurent également l'alimentation en puissance électrique de l'équipement 5 pendant la recharge des batteries, ou en cas de défaillance de celles-ci.

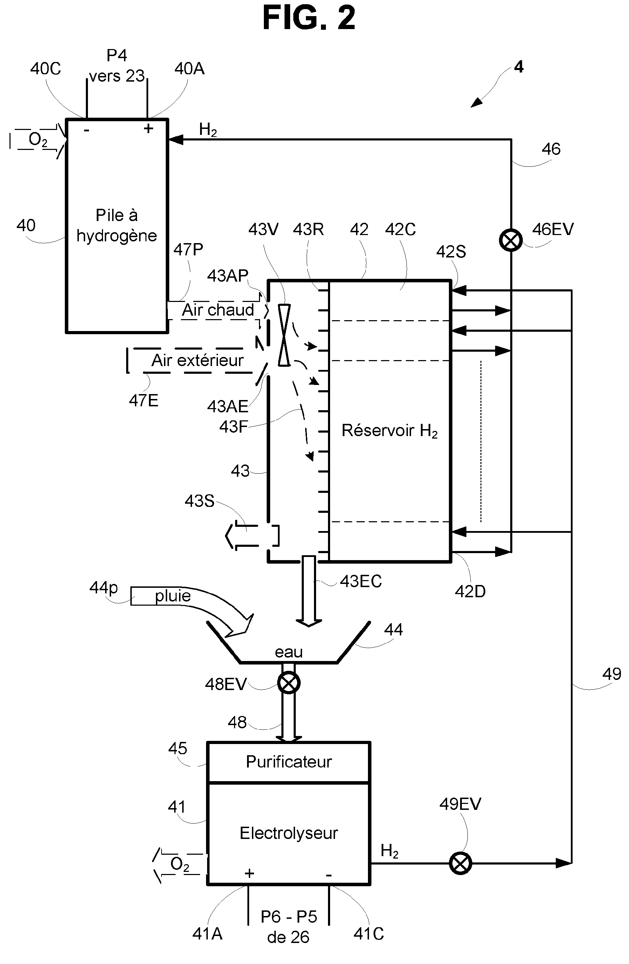

Selon la réalisation du système d'alimentation montrée à la figure 1, les deux unités génératrices électrochimiques 4 sont identiques et ont de l'hydrogène pour combustible. L'une d'elles est décrite ci-après en référence à la figure 2.

Chaque unité génératrice électrochimique 4 comprend sous forme de modules, une pile à hydrogène 40, un électrolyseur 41, un réservoir de stockage d'hydrogène 42, un condenseur 43 et un réservoir-collecteur d'eau 44 et un purificateur d'eau 45. En variante, un réservoir de stockage d'hydrogène, un condenseur, un réservoir-collecteur d'eau et un purificateur d'eau sont communs aux unités 4 comprenant chacune un électrolyseur individuel 41 et une pile à hydrogène individuelle 40.

La pile à hydrogène 40 est par exemple de technologie à membrane d'échange de protons PEM ("Proton Exchange Membrane" en anglais). L'hydrogène sous forme de dihydrogène est déchargé du module de stockage d'hydrogène 42 via une conduite 46 ayant une électrovanne 46EV ouverte sous la commande de l'unité de gestion 2, pour s'oxyder à l'anode 40A de la pile. L'oxygène provenant de l'air ambiant est ainsi réduit sur la cathode 40C de la pile avec un échange d'ions pour fournir du courant électrique en sortie de la pile 40 et de l'air chargé de vapeur d'eau dans une conduite 47P qui, selon une variante, peut être reliée au condenseur 43. En fonctionnement, la pile à hydrogène 40 fournit rapidement une puissance nettement plus élevée que la puissance électrique P5 nécessaire au fonctionnement de l'équipement électrique 5.

Sous la commande de l'unité de gestion 2, l'électrolyseur 41 est alimenté en électricité par la source 6 et en eau par le réservoir-collecteur 44 à travers une conduite 48 ayant une électrovanne 48EV ouverte sous la commande de l'unité de gestion 2, et à travers le purificateur d'eau 45. L'électrolyseur opère à faible pression et basse température pour décomposer l'eau collectée et purifiée en oxygène et en hydrogène. A l'anode 41 A de l'électrolyseur, l'oxygène s'échappe dans l'air. A la cathode 41C de l'électrolyseur, l'hydrogène est produit sous faible pression pour être stocké dans le réservoir 42 via une conduite 49 ayant une électrovanne 49EV ouverte sous la commande de l'unité de gestion 2. Par exemple, l'électrolyseur 41 est compact et comprend un électrolyte à l'état solide comme une membrane polymère PEM. L'électrolyse de l'eau est déclenchée dans l'électrolyseur 41 par un apport d'électricité en sortie de l'unité de gestion 2 qui gère la durée de l'électrolyse et de l'ouverture des électrovannes 48EV et 49EV jusqu'à ce que le réservoir de stockage d'hydrogène 42 soit plein.

Le réservoir de stockage d'hydrogène 42 et le condenseur de vapeur d'eau 43 sont de préférence sous la forme d'au moins un conteneur.

Le réservoir 42 contient des caissons 42C, qui peuvent être sous forme de bouteilles et qui sont empilés verticalement suivant la réalisation illustré. Chaque caisson 42C a une entrée de stockage 42S raccordée à la conduite 49 pour stocker directement l'hydrogène produit par la cathode 41C de l'électrolyseur 41 et une sortie de déstockage 42D raccordée à la conduite 46 pour déstocker directement l'hydrogène vers l'anode 40A de la pile 40. En variante, l'entrée 42S et la sortie 42D sont réunies en une seule bouche de stockage/déstockage du caisson.

Le condenseur 43 est par exemple sous la forme d'une colonne creuse métallique ayant en partie haute une entrée d'admission d'air 43AE pour admettre de l'air ambiant 47E extérieur à l'unité génératrice, et en partie basse une sortie d'échappement d'air 43S vers l'extérieur et une sortie de récupération d'eau de condensation 43EC dirigée vers le réservoir-collecteur d'eau 44,. Le condenseur 43 contient un système de convection forcé d'air et un échangeur thermique. Le système de convection est par exemple constitué par un ventilateur électrique 43V commandé par l'unité de gestion 2 et disposé en partie haute devant l'entrée d'air 43AE. L'échangeur thermique est par exemple sous la forme d'un radiateur 43R ayant des ailettes orientées vers l'intérieur du condenseur 43 pour être au contact de l'air ventilé et un socle constituant une cloison thermiquement conductrice, par exemple en graphite, commune au condenseur et aux caissons 42C du réservoir de stockage 42.

Le réservoir-collecteur d'eau 44 comprend une cuve pour collecter par gravité de l'eau de condensation 43EC qui est produite par le condenseur 43. Optionnellement, le réservoir-collecteur 44 collecte de l'eau de pluie 44p. Le réservoir-collecteur 44 est relié par la conduite 48 dont l'électrovanne 48EV est ouverte sous la commande de l'unité de gestion 2 pour alimenter en eau le purificateur 45 et l'électrolyseur 41 lorsque celui-ci est alimenté électriquement par la source intermittente 6 pour produire de l'hydrogène à stocker. Le purificateur 45 purifie l'eau collectée pour satisfaire la qualité d'eau requise par l'électrolyseur 41.

Le réservoir de stockage d'hydrogène 42 stocke directement l'hydrogène produit par l'électrolyseur 41 et fournit directement de l'hydrogène en tant que vecteur énergétique à la pile à hydrogène 40. Le réservoir 42 est chargé avec l'hydrogène produit à une pression basse typiquement d'une dizaine de bar par l'électrolyseur 41 via l'électrovanne 49EV ouverte sous la commande de l'unité de gestion 2 dans la conduite 49. Chaque caisson 42C dans le réservoir 42 contient un alliage à base de terre rare et de métal, tel qu'un alliage de lanthane et nickel, au contact du socle du radiateur 43R.

Lors du stockage d'hydrogène qui est exothermique, l'alliage présentant une capacité d'adsorption massique réversible élevée adsorbe l'hydrogène produit par l'électrolyseur 41 pour former un substrat d'hydrure, tel que l'hydrure LaNi₅H₆, avec un dégagement de chaleur vers l'extérieur. Ce stockage direct de l'hydrogène produit ne recourt pas à une compression de plusieurs centaines de bar de l'hydrogène comme pour le stockage d'hydrogène gazeux ou liquide dans des bouteilles et présente un rendement énergétique très élevé.

La réaction d'hydruration étant réversible, le réservoir 42 déstocke l'hydrogène stocké par désorption au moyen d'un transfert de la chaleur fournie par l'air 47E admis dans le condenseur 43 à la réaction endothermique transformant l'hydrure en alliage et hydrogène. L'hydrogène est déstocké sous une pression de déstockage plus faible et sous une température plus élevée, via la conduite de décharge 46 avec l'électrovanne 46EV ouverte par l'unité de gestion 2. La pression de déstockage de quelques bars est plus faible que celle du stockage d'hydrogène et sensiblement supérieure à la pression atmosphérique et correspond à la pression de la pile 40. Le métal passe alors de l'état d'hydrure à son état d'origine prêt à stocker de l'hydrogène produit à nouveau. Pour le déstockage d'hydrogène, le ventilateur 43V est mis en fonctionnement par l'unité de gestion 2 afin que la quantité de chaleur nécessaire à la désorption soit apportée par l'air extérieur relativement humide 47E. L'air 43F forcé par le ventilateur 43V dans le condenseur 43, par exemple avec un débit de 1m³/s environ, se refroidit au contact des ailettes du radiateur 43R auquel l'hydrure prélève la chaleur nécessaire au déstockage d'hydrogène endothermique.

Lors du refroidissement de l'air forcé 43F dans le condenseur au cours de l'échange thermique avec l'hydrure via le radiateur 43R, la température de l'air passe à une température d'environ 1°C, supérieure à la température de rosée de l'air, sans que l'eau de condensation n'atteigne la température de congélation et ne gèle, afin de transformer la vapeur d'eau saturée en eau liquide 43EC récupérable par le réservoir-collecteur 44. Un contrôleur 20 dans l'unité de gestion 2 est relié à un thermomètre dans le condenseur 43 pour surveiller que la température à la surface du radiateur 43R n'atteigne pas 0°C.

Le réservoir 42 et le condenseur 43 sont dimensionnés de sorte que le condenseur fournisse suffisamment d'eau à l'électrolyseur via le purificateur 45 et de sorte que l'électrolyseur fournisse suffisamment d'hydrogène à stocker pour que la pile 40 fournisse rapidement de l'énergie électrique aux batteries 31 à recharger typiquement en quelques heures, tout en alimentant l'équipement 5. Cycliquement sous la commande de l'unité de gestion 2, les batteries 31 sont chargées rapidement par la pile 40, et se déchargent lentement pour alimenter l'équipement 5 pendant une longue période sans vent et sans ensoleillement, par exemple de 10 jours environ, et donc pendant une inactivité de la source de puissance intermittente 6. La quantité de chaleur retirée par le réservoir de stockage 42 excède les besoins en eau de l'électrolyseur pour la production d'hydrogène nécessaire au fonctionnement de la pile pendant la recharge des batteries depuis la puissance de décharge P3m à la puissance de pleine charge P3M. Par exemple, pendant le déstockage d'hydrogène, 3 litres d'eau de condensation environ peut être produit en seulement 60 minutes environ et serviront à la production de 3,75 Nm³ (mètre cube normal) d'hydrogène par l'électrolyseur. La consommation en hydrogène de la pile pour 4 kW pour 3h est de 11 Nm³ environ et permet la production de 9 litres d'eau de condensation environ ainsi que la production de 12 kWh pour recharger rapidement les batteries.

En variante, si l'hygrométricité et/ou la température de l'air sur le site d'installation du système 1 sont trop faibles ou deviennent trop faibles, la chaleur apportée par l'air extérieur 47E et à prélever par le réservoir 42 via le radiateur 43R pendant le déstockage peut être comblée par le flux d'air chaud 47P chargé de vapeur d'eau, dégagé par la réaction chimique dans la pile 40 qui est en fonctionnement lors du déstockage. Dans cette variante, l'air chaud 47P chargé de vapeur d'eau est amené de la pile 40 par une conduite à une entrée d'admission 43AP du condenseur 43 devant le ventilateur 43V. La vapeur d'eau produite par le fonctionnement de la pile à hydrogène 40 ne fournit pas assez d'eau de condensation 43EC pour qu'une réserve d'hydrogène dans le réservoir 42 produite par l'électrolyseur 41 soit suffisante à la production d'électricité de la pile 40 nécessaire à la recharge des batteries 31. Une réserve d'eau renouvelable lors de la maintenance annuelle de l'unité 4 peut être prévue pour cette variante.

En revenant à la figure 1, l'unité de gestion 2 est organisée autour d'un contrôleur central 20 et comprend en outre des commutateurs 21 et 23, des convertisseurs de courant 22 et 24 et un contrôleur de charge 25 reliés au contrôleur central 20. Des sorties de chaque convertisseur 22, 24 sont reliées par un bus bifilaire 26 à 48 volts, ou par une barre de distribution électrique, aux éléments 20 à 25 inclus dans l'unité de gestion, au module de stockage d'énergie électrique 3, à l'équipement électrique 5 et aux unités génératrices électrochimiques 4. Chaque convertisseur de courant 22, 24 est programmable pour l'adapter aux courants alternatifs ou continus en sortie de la génératrice éolienne 61 et des panneaux solaires 62, et inclut un régulateur de charge piloté par le contrôleur central 20 pour réguler la consommation en courant de l'équipement 5, des batteries 31 et des électrolyseurs 41 dans les unités 4. Les nombres de convertisseurs 22 et 24 dépendent respectivement des puissances maximales de la génératrice éolienne 61 et des panneaux solaires 62.

Le procédé de gestion cyclique du système d'alimentation est implémenté sous la forme d'un programme d'ordinateur principalement dans le contrôleur 20. Le contrôleur 20 maintient automatiquement la continuité de l'alimentation électrique de l'équipement 5 et des éléments inclus dans l'unité 2, assure la charge des batteries 31 par la source intermittente 6 ou par l'unité génératrice électrochimique 4, le stockage d'énergie électrique dans les batteries 31 lorsque la source intermittente 6 produit un excédent d'énergie électrique, et de préférence surveille le système 1 en retransmettant des signaux d'état de fonctionnement et d'alarme par la station de télécommunications constituant l'équipement 5.

Les bornes de sortie de la génératrice éolienne 61 sont reliées respectivement par des premiers commutateurs à deux états 21 aux entrées des convertisseurs 22 pour convertir les courants intermittents en sortie de la génératrice éolienne 61 en courant continu sous une tension continue nominale de 48 V.

Les bornes de sortie des panneaux solaires photovoltaïques 62 sont reliées respectivement par des premières entrées de seconds commutateurs 23 à quatre états aux entrées des convertisseurs 24 pour convertir les courants intermittents en sortie des panneaux 62 en courant continu sous la tension continue nominale. Les sorties des piles à hydrogène 40 dans les unités 4 sont reliées respectivement par des secondes entrées de deux des commutateurs 23 aux entrées de convertisseurs 24 pour convertir les courant continus variables en sortie des piles à hydrogène en courant continu sous la tension continue nominale.

Les commutateurs 21 et 23 ont leurs états commandés par le contrôleur 20. A un premier état des commutateurs 21 et 23, la génératrice éolienne 61 et les panneaux solaires 62 alimentent l'équipement 5 et éventuellement chargent l'une ou les deux batteries 31, ou alimentent les électrolyseurs 41 pour produire de l'hydrogène, en période de vent et d'ensoleillement suffisants. A un deuxième état desdits deux commutateurs 23, les piles à hydrogène 40 rechargent rapidement les batteries 31, tout en maintenant l'alimentation de l'équipement 5. Chaque convertisseur 22, 24 comprend un adaptateur électronique pour s'adapter aux courants et tensions variables à leurs entrées et un stabilisateur de tension de sortie. Chaque convertisseur 22, 24 mesure son courant de sortie et est piloté par le contrôleur central 20 en fonction du courant de sortie mesuré par exemple pour faire varier la tension de sortie appliquée par le bus 26 aux batteries 31 jusqu'à une tension de pleine charge lors de la charge des batteries.. Le contrôleur 20 établit ainsi des puissances aux sorties des convertisseurs et évalue tantôt les puissances de sortie de la génératrice éolienne 61 et des panneaux solaires photovoltaïques 62 et donc la puissance de sortie P6 de la source de puissance 6, tantôt les puissances de sortie des piles à hydrogène 40 et donc la puissance de sortie P4 des unités génératrices électrochimiques 4.

Selon une variante plus sécurisée, les commutateurs 21, 22 peuvent comprendre des états supplémentaires pour relier des secondes sorties des commutateurs à un convertisseur de secours 2S destiné à être remplacé par l'un défaillant des convertisseurs 22, 24 sous la commande du contrôleur central 20. Par exemple, un convertisseur est défaillant si sa puissance de sortie est anormalement faible pendant une période de vent fort ou de grand ensoleillement. A cet égard, le contrôleur 20 est relié à un anémomètre et à un photomètre (non représentés) pour mesurer et surveiller la force du vent et le flux lumineux sur le site du système 1.

Le contrôleur central 20 par l'intermédiaire des régulateurs de charge inclus dans les convertisseurs 22 et 24 pilote en tension la charge des batteries 31. Selon la réalisation montrée à la figure 1, un circuit à relais 27 connecté aux bornes des batteries 31 est commandé par le contrôleur 20 pour protéger les batteries 31 contre toute surcharge et toute décharge profonde en maintenant la charge des batteries entre la puissance de décharge P3m et la puissance de pleine charge P3M, et assurer un courant élevé pour recharger les batteries par la source 6 ou les piles 40. En variante, le circuit à relais est supprimé et les batteries comprennent elles-mêmes une unité électronique assurant la protection contre toute surcharge et toute décharge profonde.

Le contrôleur de charge 25 est relié aux bornes des batteries 31 et transmet la puissance de charge P3, c'est-à-dire les tensions et les courants mesurés aux bornes des batteries 31, au contrôleur central 20. En variante, le contrôleur de charge 25 est intégré dans l'unité électronique incluse dans les batteries.

Le contrôleur central 20 commande également l'électrovanne 46EV et le ventilateur 43V et les électrovannes 48EV et 49EV respectivement lors du fonctionnement des piles 40 et du fonctionnement des électrolyseurs 41 au cours du procédé de gestion décrit ci-après. Le contrôleur 20 est également relié à divers appareils de mesure AM (non représentés) tels que anémomètre, photomètre, débitmètre, manomètre, thermomètre, pour surveiller les fonctionnements de la source de puissance électrique intermittente 6 et chaque unité génératrice électrochimique 4.

Comme cela apparaît par la description précédente des figures 1 et 2, le système d'alimentation électrique 1 de l'invention est modulable en plusieurs modules compacts, peu encombrants et raccordables et est ainsi transportables par exemple par hélicoptère pour être installé dans des endroits isolés ou difficiles d'accès ou lors d'interventions pour secourir des populations après des catastrophes naturelles ou lors de conflits. En outre, le système est conçu pour avoir une longévité de 15 ans avec seulement une maintenance annuelle.

Le procédé de gestion cyclique d'alimentation électrique selon l'invention est fondé sur l'observation qu'une pile à hydrogène 40 et une batterie 31 ont des longévités et des caractéristiques de fonctionnement très différents. Typiquement, les batteries 31 au lithium-ion ont une longévité supérieure à 15 ans environ et peuvent subir au moins 7000 cycles de charge-décharge entre les puissances P3m et P3M dont la différence représente environ 60 % de la différence entre une décharge profonde et une surcharge des batteries. Une pile à hydrogène 40 est capable de fournir une puissance électrique comprise entre une puissance minimale et une puissance maximale et a une longévité de 5000 heures environ quelle que soit la puissance électrique qu'elle délivre; par exemple sous une tension de 48 V, le courant électrique fournit par la pile est compris entre 20 A et 100 A. La longévité de la pile à hydrogène, indépendante de la puissance qu'elle délivre, est dépendante du nombre d'activation-désactivation de celle-ci qui est supérieur à 1000 environ.

Afin de ménager les piles à hydrogène 40 et ainsi différer autant que possible le recours à l'activation des piles, les piles ne sont activées que quand les batteries sont relativement déchargées et atteignent leur seuil de décharge P3m, et les piles ne fournissent jamais directement la puissance électrique P5 nécessaire au fonctionnement de l'équipement 5 lorsque les batteries sont chargées ou en cours de décharge. En d'autres termes, la continuité électrique de l'alimentation de l'équipement 5 est préservée sous la commande du contrôleur 20 prioritairement par la source de puissance électrique intermittente 6 si cette dernière fournit assez de puissance électrique pour faire fonctionner l'équipement 5, ou par le module de stockage d'énergie électrique 3 et la source 6 si la source 6 fournit une puissance électrique insuffisante pour faire fonctionner seule l'équipement 5, ou seulement par le module de stockage d'énergie électrique 3 si la source 6 ne fournit plus de puissance électrique et la puissance disponible dans les batteries n'a pas atteinte la puissance de décharge P3m. En dernier recours, lorsque la puissance de décharge P3m des batteries est atteinte, les piles à hydrogène 40 sont activées pour qu'elles produisent leur puissance maximale et à la fois chargent très rapidement les batteries 31 jusqu'à la puissance de pleine charge P3M et assurent la puissance électrique nécessaire au fonctionnement de l'équipement 5. Les batteries 31 au lithium-ion sont rechargeables très rapidement, en trois heures environ, comparativement à d'autres batteries par exemple au plomb-acide qui nécessitent une durée de recharge de 10 heures environ. Dès que les batteries sont chargées, les piles à hydrogène 40 sont désactivées et les batteries 31 qui se déchargent lentement assurent éventuellement avec la source 6 l'alimentation de l'équipement 5. La durée accumulée de l'activation des piles 40 est ainsi diminuée tant que les batteries peuvent pourvoir seules ou avec la source 6 au fonctionnement de l'équipement 5.

Par exemple pour fournir en permanence un courant de charge continu de 20 A à l'équipement 5 avec des batteries 31 ayant une capacité de 480 Ah et des puissances de décharge et de pleine charge P3m et P3M correspondant à des courants minimal et maximal de 240 A et 480 A, soit une durée de décharge et d'autonomie de (480-240)/20 = 12 h, les piles à hydrogène 40 ayant une puissance maximale P4 correspondant à un courant maximal de 100 A réparti en un courant de 20 A pour l'équipement et un courant de 100 - 20 = 80 A pour la charge des batteries chargent les batteries pendant 240/80 = 3 h ce qui correspond à un cycle de décharge/charge de 12+3 = 15 h. En supposant 111 utilisations des piles par an, la durée de vie du système d'alimentation électrique 1 est de 5000/(111 x 3) = 15 ans pour des piles ayant une longévité de plus d'une demi-année environ

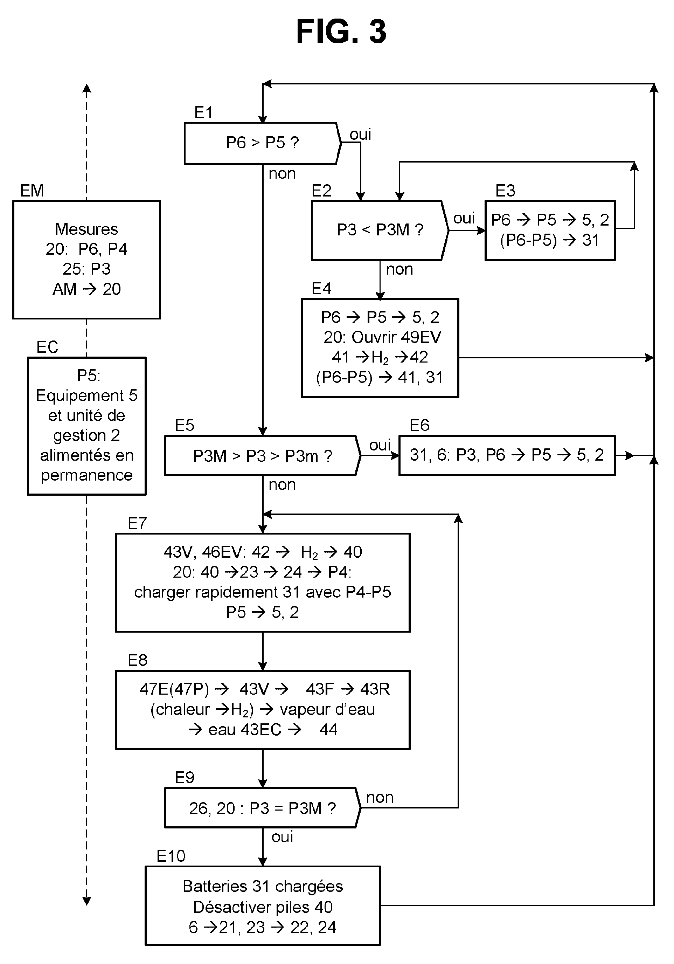

En se référant maintenant à la figure 3, le procédé de gestion cyclique selon l'invention comprend des étapes E1 à E10 essentiellement exécutées dans le contrôleur 20. Initialement lors de l'installation du système 1, les batteries 31 sont complètement chargées et dès le démarrage du système, la source de puissance électrique intermittente 6 est connectée à l'équipement électrique 5 par l'intermédiaire des commutateurs 21 et 23 et des convertisseurs 22 et 24 et fournissent la puissance nécessaire au fonctionnement de l'équipement 5 avec ou sans la contribution des batteries 31.

Comme indiqué à une étape de mesure permanente EM, le contrôleur central 20 évalue la puissance électrique P62 fournie par les panneaux solaires 62 ou P4 fournie par les piles 40 en fonction du courant mesuré en entrée des convertisseurs 24 et la puissance électrique P61 fournie par la génératrice éolienne 61 en fonction du nombre de tours du rotor de celle-ci, et ainsi la puissance électrique P6 = P61 + P62 fournie par la source 6. Le contrôleur 20 pilote la tension d'alimentation V41 des électrolyseurs 41 qui varie en fonction de la puissance disponible apportée par la source intermittente 6 pour produire de l'hydrogène lors de la charge des batteries. Le contrôleur 20 évalue en permanence la puissance disponible et le courant consommé par l'équipement 5 et les batteries 31 et ainsi la puissance P5 nécessaire au fonctionnement de l'équipement 5 et de l'unité 2 et la puissance P3 des batteries via le contrôleur de charge 25 de manière à piloter la rampe de tension des électrolyseurs 41 lors de la charge des batteries. Le contrôleur 20 reçoit en permanence des mesures de grandeurs physiques des appareils de mesure AM.

L'équipement 5 et l'unité de gestion 2 reçoivent en permanence les puissances électriques nécessaires à leurs fonctionnements par les sorties des convertisseurs 22 et 24 à travers le bus 26, comme indiqué à une étape de continuité d'alimentation électrique EC. Lesdites puissances électriques nécessaires sont désignées globalement ci-après par la puissance de charge P5 en permanence mesurée par le régulateur 25 et signalée par celui-ci au contrôleur 20. En permanence signifie que les mesures sont effectuées par période très brève de l'ordre de quelques dixièmes de seconde.

A l'étape E1, le contrôleur 20 compare la puissance électrique mesurée P6 fournie par la source intermittente 6 à la puissance de charge P5. Si la puissance P6 excède la puissance de charge P5, suite à une période avec beaucoup de vent et/ou d'ensoleillement au cours de laquelle la source 6 fournie une puissance élevée, le contrôleur 20 évalue l'excédent de puissance disponible P6-P5 pour l'attribuer à la charge des batteries ou à la production d'hydrogène. A l'étape E2, le contrôleur 20 compare la puissance P3 des batteries 31 à leur puissance de pleine charge P3M. Si P3 < P3M, l'équipement 5 et l'unité 2 offrant une impédance plus faible que celle des batteries, la puissance électrique P6 fournie par la source intermittente 6 est en priorité utilisée pour alimenter l'équipement 5 et l'unité 2 et les batteries 31 accumulent l'excédent de puissance électrique P6-P5 fournie par la source 6 jusqu'à ce que les batteries atteignent leur puissance de pleine charge P3M, à l'étape E3. Dans le cas contraire à l'étape E2 où les batteries ont leur puissance de pleine charge P3M, le contrôleur 20 commande la tension d'alimentation V41 des électrolyseurs 41 pour que l'excédent de puissance P6-P5 serve aussi à alimenter les électrolyseurs 41 afin que leurs cathodes 41C produisent de l'hydrogène stocké dans les réservoirs de stockage 42 à l'étape E4. Dans ce cas, le contrôleur 20 commande aussi l'ouverture des électrovannes 49EV tant que l'hydrogène produit est à stocker dans les réservoirs 42 via les conduites 49.

En revenant à l'étape E1, si la puissance mesurée P6 fournie par la source 6 est insuffisante, voire nulle, pour alimenter l'équipement 5 et l'unité 2 avec la puissance de charge requise P5, le contrôleur 20 compare la puissance P3 des batteries 31 à leur seuil de décharge P3m, ou selon la variante, récupère la puissance mesurée P3 transmise par l'unité électronique incluse dans les batteries, à l'étape E5. Si la charge P3 des batteries est suffisante, l'équipement 5 et l'unité 2 sont alimentés avec la puissance fournie par la source 6 comblée par celle extraite des batteries 31, à l'étape E6. Pendant les étapes précédentes E1 à E6, l'équipement 5 et l'unité 2 sont ainsi alimentés par la source 6 et/ou les batteries 31 tant que la puissance P3 des batteries demeure supérieure au seuil de décharge P3m.

Si à l'étape E5 les batteries 31 sont déchargées après une période de vent et d'ensoleillement faibles, voire une absence de vent et de luminosité, correspondant à P3 = P3m, le contrôleur 20 met en fonctionnement les ventilateurs 43V et commande l'ouverture des électrovannes 46EV pour que les réservoirs 42 déstockent de l'hydrogène vers les anodes 40A des piles 40 via les conduites 46 et les piles soient activées à l'étape E7. Le contrôleur 20 commande les commutateurs 23 pour connecter la sortie des piles à hydrogène 40 aux convertisseurs 24 pour que les convertisseurs chargent très rapidement les batteries 31 par le bus 26 avec l'excédent P4-P5 de la puissance électrique produite par les piles jusqu'à la puissance de pleine charge P3M. La puissance P5 nécessaire au fonctionnement de l'équipement 5 et de l'unité 2 est extraite de la puissance P4 générée par les piles 40 qui absorbent une quantité d'hydrogène variable en fonction de la consommation en courant des batteries et de l'équipement 5.

A l'étape E8 concomitante à l'étape E7, les ventilateurs en fonctionnement 43V forcent l'air extérieur 47E à passer sur les radiateurs 43R dans les condenseurs 43. Les radiateurs 43R captent la chaleur de l'air extérieur ventilé 47E et la transfèrent à l'hydrure dans les caissons 42C des réservoirs de stockage 42 au cours de la désorption endothermique transformant l'hydrure en alliage et hydrogène afin de déstocker de l'hydrogène nécessaire au fonctionnement des piles 40. L'échange thermique par les radiateurs 43R condense la vapeur d'eau de l'air extérieur 47E en eau de condensation 43EC qui est recueillie dans les réservoirs-collecteurs 44. Selon la variante précitée, la vapeur d'eau dans l'air chaud 47P dégagé par les piles à hydrogène 40 en fonctionnement est aussi condensée en eau 43EC. Simultanément aux étapes E7 et E8, le contrôleur 20 surveille l'évolution de la recharge des batteries 31 signalée par le contrôleur de charge 25, ou l'unité électronique incluse dans les batteries, à l'étape E9.

Dès que les batteries 31 ont atteint leur puissance de pleine charge P3M à l'étape E9, le contrôleur 20 arrête le ventilateur 43V et ferme les électrovannes 46EV ce qui désactive les piles 40, et commande les commutateurs 23 pour connecter les sorties des panneaux solaires 62 aux convertisseurs 24, à l'étape E10. Après l'étape E10, comme après les étapes E4 et E6, le contrôleur 40 revient ensuite à l'étape E1 du procédé afin que l'équipement 5 et l'unité 2 soient alimentés en priorité par la source intermittente 6 aux étapes E2 à E4 ou par au moins les batteries 31 à l'étape E6.

Selon une variante de l'étape E7, le contrôleur 20 commande aussi les commutateurs 21 qui déconnectent la génératrice éolienne 61 et les convertisseurs 22 jusqu'à ce que les batteries 31 atteignent la puissance de pleine charge P3M.

Selon une deuxième utilisation, la source de puissance intermittente 6 est un réseau de distribution d'énergie électrique local remplaçant la génératrice éolienne 61 et les panneaux solaires 62, et le système 1 sert de générateur électrique de secours en cas de panne du réseau électrique local. Pour cette deuxième utilisation, le réseau électrique est connecté aux convertisseurs 22 et/ou 24 à travers les commutateurs 21 et/ou 23. Les convertisseurs sont configurés par le contrôleur 20. Le procédé de gestion de l'alimentation électrique de l'équipement électrique 5 et de l'unité de gestion 2 est similaire à celui décrit ci-dessus. Aux étapes E1 à E4, tant que le réseau électrique fournit de la puissance électrique, l'équipement 5 et l'unité de gestion 2 sont alimentés par le réseau électrique qui peut servir, si nécessaire, à produire de l'hydrogène par les électrolyseurs 41 à l'étape E4. Dès que le réseau électrique est coupé, les batteries 31 relayent le réseau à l'étape E6. Si la coupure du réseau persiste jusqu'à ce que la puissance P3 des batteries atteigne le seuil de décharge P3m à l'étape E5, les batteries sont rechargées par l'activation des piles 40 aux étapes E7 à E10.

La défaillance du réseau électrique local peut être due à une panne plus ou moins fréquente, mais aussi à une détérioration du réseau faisant suite à une catastrophe naturelle, comme une tempête, un séisme ou un tsunami.

Lorsque l'équipement électrique 5 est une station de télécommunications, la station dont l'alimentation électrique est gérée par l'unité de gestion 2 assure sans discontinuité des communications avec des terminaux mobiles quel que soit l'état de la source intermittente 6 pendant plus d'une dizaine de jours consécutifs. Par exemple, les terminaux mobiles sont ceux de groupes de professionnels pour des services de sécurité publique, organisés en réseau de radiocommunications terrestre. Si la station de télécommunications est installée sur un site isolé, par exemple au sommet d'une montagne difficilement accessible, l'unité de gestion 2 selon l'invention permet de maintenir le fonctionnement de la station pendant plusieurs jours consécutifs lorsque la source intermittente ne produit pas ou produit insuffisamment d'énergie électrique pour l'équipement. En particulier lorsque la source intermittente est un réseau de distribution électrique, le système 1 permet de différer de plusieurs jours l'intervention d'une équipe de maintenance pour réparer le réseau endommagé.

Selon d'autres applications, l'équipement électrique 5 est un moteur électrique, comme par exemple une pompe pour extraire de l'eau d'un puits, ou un système de surveillance.

L'invention décrite concerne un procédé et une unité de gestion d'alimentation électrique pour assurer la continuité de l'alimentation électrique d'un équipement électrique fournie en priorité par une source de puissance électrique intermittente. Selon une implémentation, les étapes du procédé de l'invention sont déterminées par les instructions d'un programme d'ordinateur incorporé dans l'unité de gestion, en particulier dans le contrôleur 20 de l'unité de gestion 2. Le programme apte à être mis en oeuvre dans l'unité de gestion de l'invention comporte des instructions de programme qui, lorsque ledit programme est exécuté dans l'unité de gestion dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

## Revendications

1. - Procédé pour gérer la continuité de l'alimentation électrique d'un équipement électrique (5), le procédé recourant à un module de stockage d'énergie électrique (3) et une unité génératrice électrochimique à combustible gazeux (4), **caractérisé en ce que** l'alimentation électrique de l'équipement (5) est fournie en priorité par une source de puissance électrique intermittente (6) et **en ce qu'**il comprend :
une alimentation (E2-E3-E4) par la source (6) de l'équipement (5), du module de stockage d'énergie électrique (3) et de l'unité génératrice électrochimique (4) pour une production et un stockage du combustible dans l'unité génératrice électrochimique (4) lorsque la puissance (P6) de la source excède la puissance de fonctionnement (P5) de l'équipement (5) et la puissance (P3) du module de stockage d'énergie électrique (3) est à un premier seuil de puissance (P3M), et
un déstockage (E7-E8-E9) du combustible dans l'unité génératrice électrochimique (4), une alimentation (E7-EC) de l'équipement (5) par l'unité génératrice électrochimique et un chargement (E7) du module de stockage d'énergie électrique (3) par l'unité génératrice électrochimique dès que la puissance (P3) du module de stockage d'énergie électrique est à un second seuil de puissance (P3m) inférieur au premier seuil et jusqu'à ce que la puissance du module de stockage d'énergie électrique chargé par l'unité génératrice électrochimique atteigne le premier seuil de puissance (P3M).

2. - Procédé selon la revendication 1, comprenant en outre une alimentation (E3-EC) de l'équipement (5) par la source (6) et un chargement (E3) du module de stockage d'énergie électrique (3) par la source intermittente (6) lorsque la puissance (P6) de la source excède la puissance de fonctionnement (P5) de l'équipement (5) et la puissance (P3) du module de stockage d'énergie électrique est comprise entre les premier et second seuils de puissance (P3M, P3m), et
une alimentation (E6-EC) de l'équipement (5) par au moins le module de stockage d'énergie électrique (3) lorsque la puissance (P6) de la source intermittente (6) est inférieure à la puissance de fonctionnement (P5) de l'équipement (5) et la puissance (P3) du module de stockage d'énergie électrique est comprise entre les premier et second seuils de puissance (P3M, P3m).

3. - Procédé selon la revendication 1 ou 2, comprenant une alimentation (EC) d'une unité (2) pour gérer l'alimentation de l'unité génératrice électrochimique (4) en fonction de la charge du module de stockage d'énergie électrique (3), simultanément avec l'alimentation de l'équipement.

4. - Procédé selon l'une des revendications 1 à 3, comprenant dans l'unité génératrice électrochimique (4)
une production de combustible (E4) par un électrolyseur (41) et un stockage du combustible produit dans un réservoir de stockage (42) lorsque l'électrolyseur (41) est alimenté par la source (6), et
un déstockage (E7) du combustible depuis le réservoir de stockage (42) dans une pile à combustible (40) dès que la puissance du module de stockage d'énergie électrique est au second seuil de puissance (P3m) et jusqu'à ce que la puissance du module de stockage d'énergie électrique alimenté par la pile atteigne le premier seuil de puissance (P3M).

5. - Procédé selon l'une des revendications 1 à 4, selon lequel le combustible est de l'hydrogène.

6. - Procédé selon la revendication 5, comprenant une condensation (E8) de vapeur d'eau (47P) d'air extérieur (47E) en eau de condensation (43EC) pendant le déstockage d'hydrogène (E7).

7. - Procédé selon la revendication 6, dans lequel le stockage d'hydrogène (E4) comprend une adsorption d'hydrogène par un alliage pour former un hydrure, et la condensation (E8) résulte d'un transfert de chaleur de l'air chargé de vapeur d'eau (47E) à une réaction endothermique de l'hydrure en alliage.

8. - Système (1) pour alimenter un équipement électrique (5) sous la commande d'une unité de gestion (2), le système comprenant une source de puissance électrique intermittente (6), un module de stockage d'énergie électrique (3) et une unité génératrice électrochimique à combustible gazeux (4), l'unité de gestion (2) étant configurée pour gérer la continuité de l'alimentation d'un équipement électrique (5) apte à être fournie en priorité par la source de puissance électrique intermittente (6), l'équipement étant apte à être alimenté en outre par le module de stockage d'énergie électrique (3) et l'unité génératrice électrochimique à combustible gazeux (4),
l'unité de gestion (2) comprenant :
- un moyen (20, 21-24) pour alimenter (E4) par la source (6) l'équipement (5), le module de stockage d'énergie électrique (3) et l'unité génératrice électrochimique (4) afin de produire et stocker du combustible dans l'unité génératrice électrochimique (4) lorsque la source a une puissance (P6) excédant la puissance de fonctionnement (P5) de l'équipement (5) et la puissance (P3) du module de stockage d'énergie électrique (3) a une puissance au moins égale à un premier seuil de puissance (P3M), et
- un moyen (20, 23-24, 46EV) pour déstocker du combustible dans l'unité génératrice électrochimique (4), alimenter l'équipement (5) par l'unité génératrice électrochimique et charger le module de stockage d'énergie électrique (3) par l'unité génératrice électrochimique dès que le module de stockage d'énergie électrique a une puissance (P3) égale à un second seuil de puissance (P3m) inférieur au premier seuil et jusqu'à ce que le module de stockage d'énergie électrique chargé par l'unité génératrice électrochimique (4) atteigne le premier seuil de puissance (P3M).

9. - Système selon la revendication 8 **caractérisé en ce que** l'unité de gestion comprend des commutateurs (21, 23) reliés à la source (6) et à l'unité génératrice électrochimique (4), des convertisseurs de courant (22, 24) reliés au module de stockage d'énergie électrique (3), à l'équipement (5) et à l'unité génératrice électrochimique (4), et un moyen de commande (20) apte à commander les commutateurs et les convertisseurs pour que l'unité génératrice électrochimique (4) soit apte à alimenter l'équipement (5) et le module de stockage d'énergie électrique (3) dès que le module de stockage d'énergie électrique a une puissance égale au second seuil de puissance (P3m) et jusqu'à ce que le module de stockage d'énergie électrique chargé par l'unité génératrice électrochimique atteigne le premier seuil de puissance (P3M), et pour qu'au moins le module de stockage d'énergie électrique (3) soit apte à alimenter l'équipement (5) lorsque la source intermittente (6) a une puissance (P6) inférieure à la puissance de fonctionnement (P5) de l'équipement (5) et le module de stockage d'énergie électrique a une puissance comprise entre les premier et second seuils de puissance (P3M, P3m).

10. - Système (1) selon la revendication 8 ou 9 **caractérisé en ce que** la source intermittente est une source d'énergie renouvelable (61, 62).

11. - Système (1) selon la revendication 8 ou 9, **caractérisé en ce que** la source intermittente (6) est un réseau de distribution d'énergie électrique.

12. - Système selon l'une quelconque des revendications 8 à 11, dans lequel l'unité génératrice électrochimique (4) comprend une pile à combustible (40) pour alimenter l'équipement (5) et charger le module de stockage d'énergie électrique dès que le module de stockage d'énergie électrique a une puissance (P3) égale au second seuil de puissance (P3m) et jusqu'à le module de stockage d'énergie électrique chargé par l'unité génératrice électrochimique atteigne le premier seuil de puissance (P3M), un électrolyseur (41) pour produire du combustible lorsque la source a une puissance (P6) excédant la puissance de fonctionnement (P5) de l'équipement (5) et le module de stockage d'énergie électrique (3) a une puissance (P3) au moins égale au premier seuil de puissance (P3M), et un réservoir de stockage (42) pour stocker du combustible produit par l'électrolyseur et déstocker du combustible dans la pile.

13. - Système selon la revendication 12, dans lequel le combustible est de l'hydrogène.

14. - Système selon la revendication 13, dans lequel l'unité génératrice électrochimique (4) comprend un condenseur (43) pour condenser de la vapeur d'eau d'air extérieur (476E) en eau de condensation (43EC) pendant un déstockage d'hydrogène du réservoir de stockage (42) dans la pile (40) et un réservoir-collecteur d'eau (44) pour collecter l'eau de condensation (43EC) pendant le déstockage d'hydrogène et fournir l'eau de condensation (43EC) à l'électrolyseur (41) lorsque l'électrolyseur (41) est alimenté par la source (6).

15. - Système selon la revendication 14, dans lequel le condenseur (43) est apte à condenser de la vapeur d'eau (47P) fournie par la pile (40).

16. - Programme d'ordinateur apte à être mis en oeuvre dans une unité de gestion (2) pour gérer la continuité de l'alimentation d'un équipement électrique (5), ledit programme étant **caractérisé en ce qu'**il comprend des instructions qui, lorsque le programme est exécuté dans l'unité de gestion, réalisent les étapes du procédé selon la revendications 1 à 7.

## Patentansprüche

1. Verfahren zur Steuerung der Kontinuität der elektrischen Stromversorgung eines Elektrogerätes (5), wobei sich das Verfahren eines Speichermoduls für elektrische Energie (3) bedient und einer elektro-chemischen Gas-Energiegeneratoreinheit (4), **dadurch gekennzeichnet, dass** die elektrische Stromversorgung des Geräts (5) vorrangig durch eine intermittierende elektrische Leistungsquelle erfolgt (6) und dass es folgendes umfasst:
- eine Stromversorgung (E2-E3-E4) über die Quelle (6) des Gerätes (5), vom Speichermodul für elektrische Energie (3) und der elektro-chemischen Energiegeneratoreinheit (4) zur Produktion und Speicherung des Brennstoffs in der elektrochemischen Energiegeneratoreinheit (4), wenn die Leistung (P6) der Quelle die Betriebsleistung (P5) des Gerätes (5) übersteigt und die Leistung (P3) des Speichermoduls für elektrische Energie (3) auf einer ersten Leistungsschwelle (P3M) steht, und
- ein Entladen (E7-E8-E9) des Brennstoffs in eine elektro-chemische Energiegeneratoreinheit (4), eine Stromversorgung (E7-EC) des Gerätes (5) durch die elektro-chemische Energiegeneratoreinheit (4), und ein Laden (E7) des Speichermoduls für elektrische Energie (3) durch die elektro-chemische Energiegeneratoreinheit, sobald die Leistung (P3) der elektro-chemischen Energiegeneratoreinheit auf einer zweiten Leistungsschwelle (P3m) steht, der niedriger ist, als die erste Schwelle, bis dass die Leistung des, durch die elektro-chemische Energiegeneratoreinheit aufgeladenen Speichermoduls für elektrische Energie die erste Leistungsschwelle (P3M) erreicht.

2. Verfahren gemäß Anspruch 1, darüber hinaus umfassend:
- eine Stromversorgung (E3-EC) des Gerätes (5) über die Quelle (6) und ein Laden (E3) des Speichermoduls für elektrische Energie (3) über die intermittierende Quelle (6), wenn die Leistung (P6) der Quelle die Leistung (P5) des Geräts (5) übersteigt und die Leistung (P3) des Speichermoduls für elektrische Energie (3) zwischen der ersten und der zweiten Schwellenleistung (P3M, P3m) liegt, und
- eine Stromversorgung (E6-EC) des Gerätes (5), mindestens über das Speichermodul für elektrische Energie (3), wenn die Leistung (P6) der intermittierenden Quelle (6) kleiner ist, als die Betriebsleistung (P5) des Gerätes (5) und die Leistung (P3) des Speichermoduls für elektrische Energie zwischen der ersten und der zweiten Schwellenleistung (P3M, P3m) liegt.

3. Verfahren gemäß Anspruch 1 oder 2, umfassend eine Stromversorgung (EC) einer Einheit (2) zur Steuerung der Stromversorgung der elektro-chemischen Gas-Energiegeneratoreinheit (4) je nach Ladezustand des Speichermoduls für elektrische Energie (3), gleichzeitig mit der Stromversorgung des Gerätes.

4. Verfahren gemäß einem der Ansprüche 1 bis 3, umfassend in der elektro-chemischen Gas-Energiegeneratoreinheit (4)
- eine Brennstoffproduktion (E4) durch eine Elektrolysevorrichtung (41) und ein Lager des produzierten Brennstoffs in einem Lagerbehälter (42), während die Elektrolyse-Vorrichtung (41) über die Quelle (6) mit Strom versorgt ist, und
das Entladen (E7) des Brennstoffs aus dem Lagerbehälter (42) in eine Brennstoffzelle (40), sobald die Leistung des Speichermoduls für elektrische Energie auf der zweiten Leistungsschwelle steht (P3m) und bis dass die Leistung des, von der Brennstoffzelle versorgten Speichermoduls für elektrische Energie die erste Leistungsschwelle erreicht (P3M).

5. Verfahren gemäß einem der Ansprüche 1 bis 4, in dem der Brennstoff Wasserstoff ist.

6. Verfahren gemäß Anspruch 5, umfassend während dem Wasserstoff-Entladeprozess (E7) eine Kondensation (E8) von Außenluft (47E)-Wasserdampf (47P) in Kondenswasser (43EC).

7. Verfahren gemäß Anspruch 6, in dem die Wasserstofflagerung (E4) eine Wasserstoffadsorption durch eine Legierung umfasst, um ein Hydrid zu bilden, und wo die Kondensation (E8) aus dem Wärme-Transfer der wasserdampf-angereicherten Luft (47E) an eine endothermische Reaktion des legierten Hydrids stammt.

8. System (1) zur Stromversorgung eines elektrischen Geräts (5) auf Anweisung einer Steuereinheit (2), wobei das System eine intermittierende elektrische Leistungsquelle (6), ein Speichermodul für elektrische Energie (3) und eine elektro-chemische Gas-Energiegeneratoreinheit (4) umfasst, wobei die Steuereinheit (2) konfiguriert ist, um die Steuerung der Kontinuität der elektrischen Stromversorgung eines Elektrogerätes (5) zu steuern, welches geeignet ist, vorrangig über die intermittierende Leistungsquelle (6) versorgt zu werden, wobei das Gerät geeignet ist, über das Speichermodul für elektrische Energie (3) und eine elektro-chemische Gas-Energiegeneratoreinheit (4) versorgt zu werden, wobei die Steuerungseinheit (2) folgendes umfasst:
- Ein Mittel (20, 21-24) zur Stromversorgung (E4) über die Quelle (6) des Gerätes (5), des Speichermoduls für elektrische Energie (3) und der elektro-chemischen Gas-Energiegeneratoreinheit (4), um in der elektro-chemischen Gas-Energiegeneratoreinheit (4) Brennstoff zu produzieren und zu speichern, wenn die Quelle eine Leistung (P6) aufweist, welche die Betriebsleistung (P5) des Geräts (5) übersteigt und die Leistung (P3) des Speichermoduls für elektrische Energie (3) eine Leistung aufweist, die mindestens gleich ist mit einem ersten Leistungsschwellenwert (PM3), und
- ein Mittel (20, 23-24, 46EV) zum Entladen des Brennstoffs in eine elektro-chemische Gas-Energiegeneratoreinheit (4), zur Versorgung des Gerätes (5) über die elektro-chemische Gas-Energiegeneratoreinheit und zum Laden des Speichermoduls für elektrische Energie (3) durch die elektro-chemische Gas-Energiegeneratoreinheit, sobald das Speichermodul für elektrische Energie eine Leistung (P3) aufweist, die einem zweiten, niedrigeren Leistungsschwellenwert (P3m) als der erste Schwellenwert entspricht, bis dass das, durch die elektro-chemische Gas-Energiegeneratoreinheit (4) geladene Speichermodul für elektrische Energie den ersten Leistungsschwellenwert (P3M) erreicht.

9. System gemäß Anspruch 8, **dadurch gekennzeichnet, dass** die Steuereinheit Schalter (21, 23) umfasst, die mit der Quelle (6) und der elektro-chemischen Gas-Energiegeneratoreinheit (4) verbunden sind, Stromwandler (22, 24), die mit dem Speichermodul für elektrische Energie (3), dem Gerät (5) und der elektro-chemischen Gas-Energiegeneratoreinheit (4) verbunden sind, und ein Schalt- bzw. Steuermittel (20), geeignet, um die Schalter und die Wandler zu steuern, damit die elektro-chemische Gas-Energiegeneratoreinheit (4) in der Lage ist, das Gerät (5) und das Speichermodul für elektrische Energie (3) zu versorgen, sobald das Speichermodul für elektrische Energie eine Leistung aufweist, die dem zweiten Leistungsschwellenwert (P3m) entspricht und bis dass das durch die elektro-chemische Gas-Energiegeneratoreinheit geladene Speichermodul für elektrische Energie den ersten Leistungsschwellenwert (P3M) erreicht, und dass wenigstens das Speichermodul für elektrische Energie (3) in der Lage ist, das Gerät (5) zu versorgen, wenn die intermittierende Quelle (6) eine Leistung (P6) aufweist, die kleiner ist als die Betriebsleistung (P5) des Geräts (5) und wenn das Speichermodul für elektrische Energie eine Leistung aufweist, die zwischen dem ersten und dem zweiten Leistungsschwellenwert liegt (P3M, P3m).

10. System (1) gemäß Anspruch 8 oder 9, **dadurch gekennzeichnet, dass** die intermittierende Quelle eine Quelle aus erneuerbarer Energie ist (61, 62).

11. System (1) gemäß Anspruch 8 oder 9, **dadurch gekennzeichnet, dass** die intermittierende Quelle (6) ein Energieverteilernetz ist.

12. System gemäß einem beliebigen der Ansprüche 8 bis 11, indem die elektro-chemische Gas-Energiegeneratoreinheit (4) eine Brennstoffzelle (40) zur Versorgung des Geräts (5) und zum Laden des Speichermoduls für elektrische Energie umfasst, sobald das Speichermodul für elektrische Energie eine Leistung (P3) aufweist, die dem zweiten Leistungsschwellenwert (P3m) entspricht bis dass das, durch die elektro-chemische Gas-Energiegeneratoreinheit geladene Speichermodul für elektrische Energie den ersten Leistungsschwellenwert (P3M) erreicht, eine Elektrolyse-Vorrichtung (41) zur Produktion von Brennstoff, wenn die Quelle eine Leistung (P6) aufweist, die die Betriebsleistung (P5) des Geräts (5) übersteigt und das Speichermodul für elektrische Energie (3) eine Leistung (P3) aufweist, die mindestens dem ersten Leistungsschwellenwert (P3M) entspricht, und einen Lagerbehälter (42), um den von der Elektrolyse-Vorrichtung produzierten Brennstoff zu lagern und Brennstoff für die Zelle bereitzuhalten.

13. System gemäß Anspruch 12, in dem der Brennstoff Wasserstoff ist.

14. System gemäß Anspruch 13, in dem die elektro-chemische Gas-Energiegeneratoreinheit (4) einen Kondensator (43) umfasst, zum Kondensieren von Dampf der Außenluft (476E) in Kondenswasser (43EC) während einem Entladen von Wasserstoff aus dem Lagerbehälter (42) in der Zelle (40), und ein Wasser-Sammelbehälter (44), um das Kondenswasser (43EC) während einem Entladen von Wasserstoff zu sammeln, und das Kondenswasser (43EC) der Elektrolyse-Vorrichtung (41) zuzuführen, wenn die Elektrolyse-Vorrichtung (41) von der Quelle versorgt wird.

15. System gemäß Anspruch 14, in dem der Kondensator (43) geeignet ist, den von der Zelle (40) bereitgestellten Wasserdampf (47P) zu kondensieren.

16. Computerprogramm, geeignet zur Umsetzung, in einer Steuereinheit (2) zur Steuerung der Kontinuität der elektrischen Stromversorgung eines Elektrogerätes (5), wobei besagtes Programm **dadurch gekennzeichnet ist, dass** es Anweisungen umfasst, die, wenn das Programm in der Steuereinheit ausgeführt wird, die verschiedenen Etappen des Verfahrens gemäß der Ansprüche 1 bis 7 ausführt.

## Claims

1. A method for managing the continuity of the electrical supply of an electric equipment (5), the method relying on an electric power stocking module (3) and a gaseous fuel electrochemical generating unit (4),
**characterized in that** the electrical supply of the electric equipment(5) is provided in priority by an intermittent electric power source (6) and **in that** it comprises the steps of:
supplying (E2-E3-E4) by the source (6) the equipment (5), the electric power stocking module (3) and the electrochemical generating unit (4) for producing and stocking fuel in the electrochemical generating unit (4) when the power (P6) of the source exceeds the operation power (P5) of the equipment (5) and the power (P3) of the electric power stocking module (3) is at a first power threshold (P3M), and
destocking (E7-E8-E9) the fuel in the electrochemical generating unit (4), supplying (E7-EC) the equipment (5) by the electrochemical generating unit and charging (E7) the electric power stocking module (3) by the electrochemical generating unit as soon as the power (P3) of the electric power stocking module is at a second power threshold (P3m) being lower than the first threshold and until the power of the electric power stocking module charged by the electrochemical generating unit reaches the first power threshold (P3M).

2. The method according to claim 1, further comprising the steps consisting in:
supplying (E3-EC) the equipment (5) by the source (6) and charging (E3) the electric power stocking module (3) by the intermittent source (6) when the power (P6) of the source exceeds the operation power (P5) of the equipment (5) and the power (P3) of the electric power stocking module ranges between the first and second power thresholds (P3M, P3m), and
supplying (E6-EC) the equipment (5) by at least the electric power stocking module (3) when the power (P6) of the intermittent source is lower than the operating power (P5) of the equipment (5) and the power (P3) of the electric power stocking module ranges between the first and second power thresholds (P3M,P3m).

3. The method according to claim 1 or 2, comprising supplying (EC) a unit (2) for managing the supply of the electrochemical generating unit (4) as a function of the charge of the electric power stocking module (3), simultaneously with the supply of the equipment.

4. The method according to any of claims 1 to 3, comprising in the electrochemical generating unit (4) the steps consisting in:
generating (E4) fuel by an electrolysis facility (41) and stocking the fuel generated in a stocking tank (42) when the electrolysis facility (41) is supplied by the source (6), and
destocking (E7)the fuel from the stocking tank (42) in a fuel cell (40) as soon as the power of the electric power stocking module is at the second power threshold (P3m) and until the power of the electric power stocking module supplied by the cell reaches the first power threshold (P3M).

5. The method according to any of claims 1 to 4, wherein the fuel is hydrogen.

6. The method according to claim 5, comprising condensing (E8) steam (47P) from the outside air (47E) into condensation water (47EC) during the destocking (E7) of hydrogen.

7. The method according to claim 6, wherein the stocking (E4) of hydrogen comprises an adsorption of hydrogen by an alloy so as to form a hydride, and the condensation (E8) results in a transfer of heat of the air charged with steam (47E) to an endothermic reaction of the hydride into an alloy.

8. A system (1) for supplying an electric equipment (5) under the control of a managing unit (2),the system comprising an intermittent electric power source (6), an electric power stocking module (3) and a gaseous fuel electrochemical generating unit (4), the managing unit (2) being configured to manage the continuity of the supply of an electric equipment (5) able to be supplied in priority by the intermittent electric power source (6), the equipment being able to be supplied, in addition, by the electric power stocking module (3) and the gaseous fuel electrochemical generating unit (4), the managing unit (2) comprising:
a means (20, 21-24) for supplying (E4) by the source (6) the equipment(5), the electric power stocking module (3) and the electrochemical generating unit (4) so as to produce and stock fuel in the electrochemical generating unit (4) when the source is has a power (P6) exceeding the operating power (P5) of the equipment (5) and the power (P3) of the electric power stocking module (3) has a power at least equal to a first power threshold (P3M), and
a means (20, 23-24, 46EV) for destocking fuel in the electrochemical generating unit (4), supplying the equipment (5) by the electrochemical generating unit and charging the electric power stocking module (3) by the electrochemical generating unit as soon as the electric power stocking module has a power (P3) equal to a second power threshold (P3m) lower than the first threshold and until the electric power stocking module charged by the electrochemical generating unit (4) reaches the first power threshold (P3M).

9. The system according to claim 8 **characterized in that** the managing unit comprises switches (21,23) connected to the source (6) and to the electrochemical generating unit (4), current converters (22, 24) connected to the electric power stocking module (3), to the equipment (5) and to the electrochemical generating unit (4), and a controlling means (20) able to control the switches and the converters so that the electrochemical generating unit (4) is able to supply the equipment (5) and the electric power stocking module (3) as soon as the electric power stocking module has a power being equal to the second power threshold (P3m) and until the electric power stocking module charged by the electrochemical generating unit reaches the first power threshold (P3M), and so that at least the electric power stocking module (3) is able to supply the equipment (5) when the intermittent source (6) has a power (P6) being lower than the operating power (P5) of the equipment (5) and the electric power stocking module has a power ranging between the first and second power thresholds (P3M, P3m).

10. The system (1) according to claim 8 or 9, **characterized in that** the intermittent source is a renewable energy source (61, 62).

11. The system (1) according to claim 8 or 9, **characterized in that** the intermittent source (6) is an electric power distribution network.

12. The system according to any of claims 8 to 11, wherein the electrochemical generating unit (4) comprises a fuel cell (40) for supplying the equipment (5) and charging the electric power stocking module as soon as the electric power stocking module has a power (P3) being equal to the second power threshold (P3m) and until the electric power stocking module charged by the electrochemical generating unit reaches the first power threshold (P3M), an electrolysis facility (41) for producing fuel when the source has a power (P6) exceeding the operation power (P5) of the equipment (5) and the electric power stocking module (3) has a power (P3) being at least equal to the first power threshold (P3M), and a stocking tank (42) for stocking fuel produced by the electrolysis facility and destocking fuel in the battery.

13. The system according to claim 12, wherein the fuel is hydrogen.

14. The system according to claim 13, wherein the electrochemical generating unit (4) comprises a condenser (43) for condensing the steam from outside air (476E) into condensation water (43EC) during a destocking of hydrogen from the stocking tank (42) in the cell (40) and a water tank-collector (44) for collecting the condensation water (43EC) during the destocking of hydrogen and supplying the condensation water (43EC) to the electrolysis facility (41) when the electrolysis facility (41) is supplied by the source (6).

15. The system according to claim 14, wherein the condenser (43) is able to condense steam (47P) supplied by the cell (40).

16. A computer program being able to be implemented in a managing unit (2) for managing the continuity of the supply of an electric equipment (5), said program being **characterized in that** it comprises instructions which, when the program is carried out in the managing unit, implement the steps of the method according to claims 1 to 7.
